# EUROPEAN PATENT APPLICATION

(11) **EP 3 761 250 A1**
(43) Date of publication of application: **06.01.2021**
(21) Application number: 19760194.1
(22) Date of filing: 21.02.2019
(51) Int. Cl.: G06Q 30/02, G06Q 50/10

(54) **PUBLICITY-ASSOCIATED INFORMATION PROCESSING DEVICE AND PROGRAM**

(30) Priority: 27.02.2018 JP 2018033704
(71) Applicant: Dentsu Inc., Tokyo 105-7001 (JP)
(72) Inventor: SHIMIZU, Naoki, Tokyo 105-7001 (JP); KASAHARA, Shigeto, Tokyo 105-7001 (JP)
(74) Representative: HGF
(86) International application number: PCT/JP2019/006647
(87) International publication number: WO 2019/167808

(57) **Abstract**

A publicity-associated information processing device includes: an area setting unit configured to perform an area setting process of acquiring the number of subjects correlated with a section which is selected in a predetermined sequence on the basis of section subject number information correlated with the number of subjects to whom publicity is to be provided for each section acquired by dividing an area according to a predetermined division rule and setting an evaluation target area including the selected section in a stage in which an accumulated value of the acquired number of subjects satisfies predetermined area setting conditions.

## Description

### [Technical Field]

Some aspects of the present invention relate to a publicity-associated information processing device and a program.

Priority is claimed on Japanese Patent Application No. 2018-033704, filed February 27, 2018, the content of which is incorporated herein by reference.

### [Background Art]

An analysis device that determines direct mail (DM) distribution target areas, performs "scoring analysis," "multiple regression analysis," or "profiling analysis" on the basis of set conditions using a selected analysis method, sorts a list of the DM distribution target areas on the basis of analyzed numerical values, and specifies areas to which publicity can be actually distributed within a range of the number of distribution-scheduled copies or the number of distribution-scheduled areas is known (for example, see Patent Literature 1).

### [Citation List]

### [Patent Literature]

[Patent Literature 1]
Japanese Unexamined Patent Application, First Publication No. 2010-277567

### [Summary of Invention]

### [Technical Problem]

In evaluating an advertising effect for each evaluation target area which is determined according to certain criteria, it is necessary to set evaluation target areas including a number of subjects corresponding to an appropriate number of responses in order to obtain significant evaluation results. It is preferable that evaluation target areas be set, for example, using a simple routine rather than a complex routine.

Some aspects of the invention are made in consideration of the above-mentioned circumstances and an objective thereof is to simply set evaluation target areas including a number of subjects corresponding to an appropriate number of responses.

### [Solution to Problem]

One aspect of the present invention to solve the above-described problem is a publicity-associated information processing device including: an area setting unit configured to perform an area setting process of acquiring the number of subjects correlated with a section which is selected in a predetermined sequence on the basis of section subject number information correlated with the number of subjects to whom publicity is to be provided for each section acquired by dividing an area according to a predetermined division rule and setting an evaluation target area including the selected section in a stage in which an accumulated value of the acquired number of subjects satisfies predetermined area setting conditions.

In addition, one aspect of the present invention is a program causing a computer to serve as an area setting unit configured to perform an area setting process of acquiring the number of subjects correlated with a section which is selected in a predetermined sequence on the basis of section subject number information correlated with the number of subjects to whom publicity is to be provided for each section acquired by dividing an area according to a predetermined division rule and setting an evaluation target area including the selected section in a stage in which an accumulated value of the acquired number of subjects satisfies predetermined area setting conditions.

### [Advantageous Effects of Invention]

As described above, according to some aspects of the invention, it is possible to simply set evaluation target areas including a number of subjects corresponding to an appropriate number of responses.

### [Brief Description of Drawings]

FIG. 1 is a diagram illustrating an example of a configuration of an advertisement system according to an embodiment of the invention.
FIG. 2 is a diagram illustrating an example of a configuration of a publicity-associated information processing device according to the embodiment of the invention.
FIG. 3 is a diagram illustrating an example of section subject number information according to the embodiment of the invention.
FIG. 4 is a diagram illustrating an example of evaluation target area setting information according to the embodiment of the invention.
FIG. 5 is a diagram illustrating an example of a routine of setting an evaluation target area according to the embodiment of the invention.
FIG. 6 is a flowchart illustrating an example of a process routine which is performed to set an evaluation target area by the publicity-associated information processing device according to the embodiment of the invention.

### [Description of Embodiments]

### [Example of configuration of advertisement system]

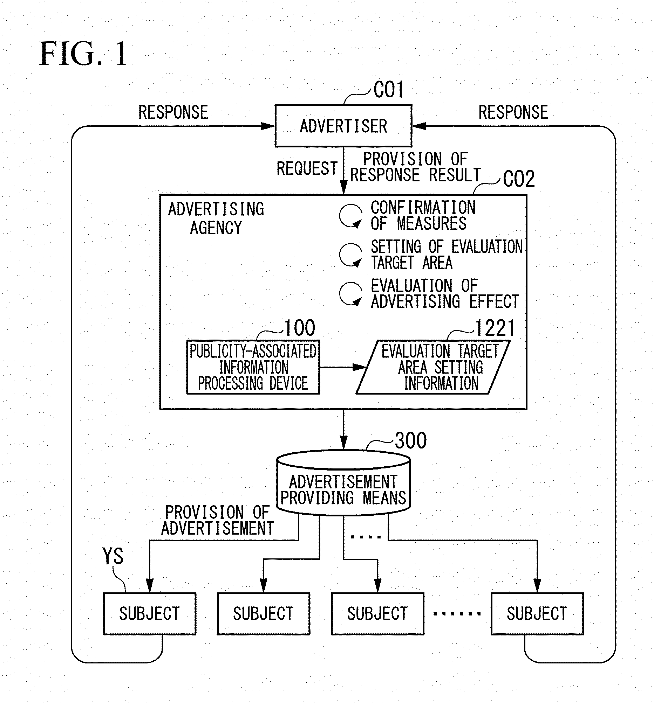

FIG. 1 is a diagram illustrating an example of a configuration of an advertisement system according to an embodiment of the invention. In the advertisement system illustrated in FIG. 1, an advertiser CO1 makes a request for an advertisement to an advertising agency CO2. The advertising agency CO2 receives a request from the advertiser CO1, confirms what measures are to be used for an advertisement, and provides an advertisement based on the confirmed measures using an advertisement providing means 300. The advertisement providing means 300 is a means that is used to provide an advertisement to subjects to whom an advertisement is to be provided (hereinafter simply referred to as "subjects") YS by the advertising agency CO2. The advertisement providing means 300 is not particularly limited as long as it is a means that can provide an advertisement to subjects. The advertisement providing means 300 may include a web site for placing an advertisement on a web page. The advertisement providing means 300 may include advertisements inserted into newspapers and direct mail. The advertisement providing means 300 may be a television broadcast, radio broadcast, or the like.

A certain subject YS out of the subjects to whom an advertisement has been provided by the advertisement providing means takes action as a response to the advertisement. Specifically, a response which is made by a subject YS includes, for example, an application for purchase of a commodity or an inquiry about a commodity by calling a phone number for receiving an application for purchase. A response which is made by a subject YS includes, for example, an application for purchase of a commodity using a mail-order business site or an application for purchase using postal matter such as an application postcard for purchase.

The responses from the subjects YS are counted by the advertiser CO1. The advertiser CO1 sends a result of counting the responses to the advertising agency CO2.

The advertiser CO1 evaluates an advertising effect using the count result of responses sent from the advertiser CO1.

In this embodiment, in evaluating an advertising effect, the advertising effect is evaluated for each evaluation target area which is indicated by evaluation target area setting information 1221. Regarding a finding, depending on the type of the advertisement providing means 300, the number of responses required for evaluation of a significant advertisement (a target number of responses) can be largely fixed for each evaluation target area. When the target number of responses is determined, the number of subjects YS required for the target number of responses (a target number of subjects) is also fixed. An evaluation target area in this embodiment is an area which is set such that the number of subjects YS who are present therein satisfies predetermined conditions determined on the basis of the target number of subjects (area setting conditions). The target number of subjects depends on the advertisement providing means 300 or advertising content, or the like and is, for example, about 20000 persons. When the target number of subjects is determined to be 20000 persons, the number of subjects in an evaluation target area satisfies a predetermined condition which is determined with respect to 20000 on the basis of the area setting conditions.

In this embodiment, an evaluation target area is set by a publicity-associated information processing device 100 of an advertising agency CO2, and the result of setting is acquired as the evaluation target area setting information 1221. A routine of setting an evaluation target area which is performed by the publicity-associated information processing device 100 will be described later.

The advertising agency CO2 considers measures to obtain a better advertising effect on the basis of the results of evaluation of the advertising effect for each evaluation target area. The advertising agency CO2 provides an advertisement based on the reviewed policy and can additionally review the policy on the basis of responses of subjects to the provided advertisement. In this way, in this embodiment, a Plan-Do-Check-Act (PDCA) cycle for an advertisement is realized.

### [Example of configuration of publicity-associated information processing device]

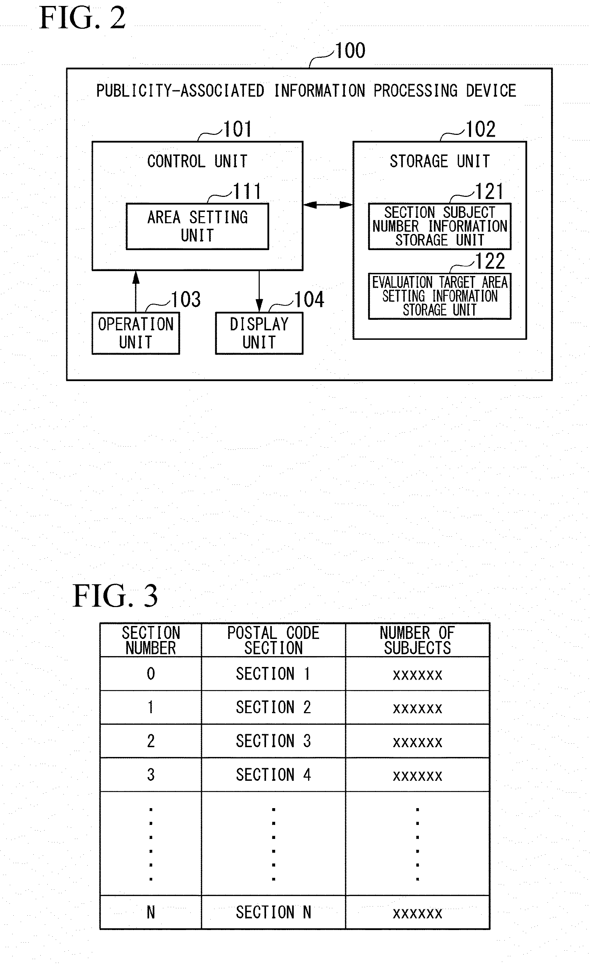

An example of a configuration of the publicity-associated information processing device 100 will be described below with reference to FIG. 2. The publicity-associated information processing device 100 illustrated in FIG. 2 includes a control unit 101, a storage unit 102, an operation unit 103, and a display unit 104.

The control unit 101 performs various types of control in the publicity-associated information processing device 100. The function of the control unit 101 is realized by causing a central processing unit (CPU) included in the publicity-associated information processing device 100 to execute a program.

The control unit 101 includes an area setting unit 111. The area setting unit 111 sets an evaluation target area. The area setting unit 111 selects sections in a predetermined order on the basis of section subject number information in which the number of subjects to whom publicity is to be provided is correlated with each postal code section (an example of a section obtained by dividing an area according to a predetermined division rule). The area setting unit 111 performs a process (an area setting process) of setting one evaluation target area including the section selected when a cumulative number of subjects to whom publicity is to be provided in the selected section has reached a predetermined numerical range (a range of a target number of subjects).

The area setting unit 111 generates evaluation target area setting information 1221 indicating the result of setting of an evaluation target area in the area setting process. The area setting unit 111 stores the generated evaluation target area setting information 1221 in an evaluation target area setting information storage unit 122.

The storage unit 102 stores various types of information which are used by the control unit 101. The storage unit 102 illustrated in FIG. 2 includes a section subject number information storage unit 121 and an evaluation target area setting information storage unit 122.

The section subject number information storage unit 121 stores section subject number information. The section subject number information is information indicating the number of subjects who are present in a postal code section, for example, for each postal code section which is an area obtained by division into all areas of the country BY postal codes.

FIG. 3 illustrates an example of section subject number information. The section subject number information illustrated in FIG. 3 is information in which a postal code section and the number of subjects are associated with each section number.

The postal code sections associated with each postal code, may, for example, starting with the postal code section with the postal code "0" as a starting point have a sequential order of associated postal code sections progressing from each preceding postal code section. For example, a postal code section which is located furthest north in the country may be correlated with section number "0," and a postal code section adjacent to the previous postal code section is sequentially correlated with section number "1" and numbers subsequent thereto toward the south.

The number of subjects correlated with each section number can be input, for example, on the basis of a national census result. The number of subjects may reflect the population of a corresponding postal code section without any change, or may reflect the number of persons who are older than a predetermined age in the population of the corresponding postal code section, or may reflect the number of persons corresponding to a certain gender. Conditions for residents corresponding to the number of subjects correlated with each section number may be changed depending on contents of an advertisement.

Description will continue with reference to FIG. 2. The evaluation target area setting information storage unit 122 stores the evaluation target area setting information 1221. As described above, the evaluation target area setting information 1221 is information indicating a result of setting of an evaluation target area through the area setting process in the area setting unit 111.

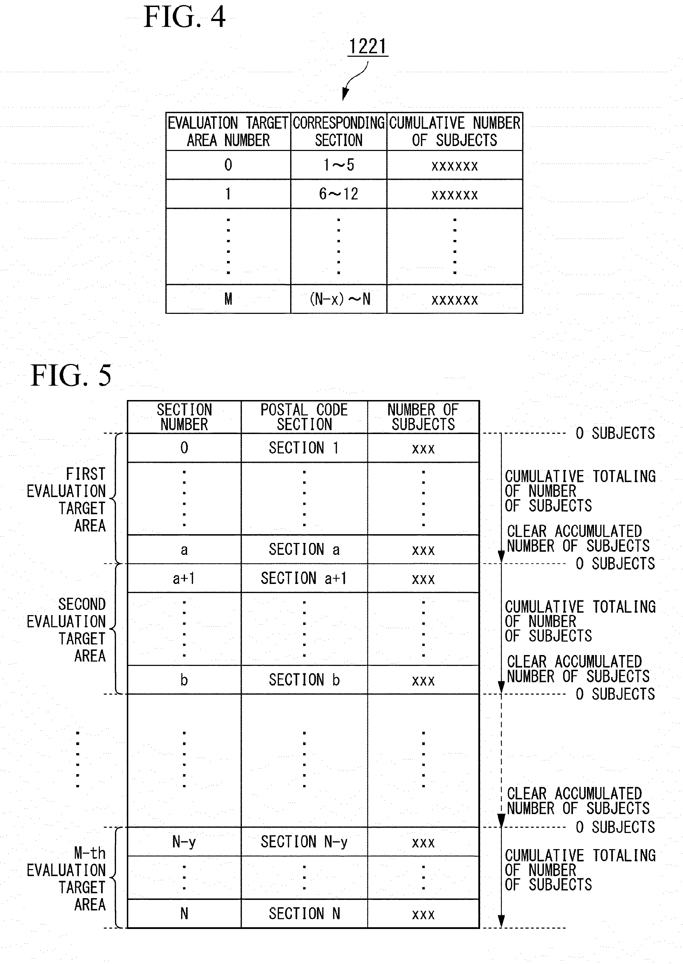

FIG. 4 illustrates an example of the evaluation target area setting information 1221. The evaluation target area setting information 1221 illustrated in FIG. 4 is information in which a section and a cumulative number of subjects are correlated with each evaluation target area number.

The evaluation target area number indicates a number (an identifier) which is assigned to the corresponding evaluation target area. The area of the corresponding section indicates a postal code section (a corresponding section) included in the corresponding evaluation target area. The cumulative number of subjects is the total number of subjects in the corresponding evaluation target area and is a sum total of the numbers of subjects for the postal code sections included in the corresponding section.

Description with reference to FIG. 2 will be continued. The operation unit 103 collectively represents an operator and an operation device included in the publicity-associated information processing device 100 and an operation device connected to the publicity-associated information processing device 100.

The display unit 104 includes a display device that is included in the publicity-associated information processing device 100 or a display device that is connected to the publicity-associated information processing device 100 and displays an image under the control of the control unit 101.

### [Example of area setting process]

An example of an area setting process which is performed by the publicity-associated information processing device 100 according to this embodiment will be described below with reference to FIG. 5.

In FIG. 5, section subject number information which is stored in the section subject number information storage unit 121 is illustrated.

The area setting unit 111 of the publicity-associated information processing device 100 starts an area setting process when performing an area setting process is instructed through a predetermined operation which an operator performs on the operation unit 103.

When the area setting process is started, first, the area setting unit 111 sums (cumulatively totals) the number of subjects correlated with a section number sequentially from section number "0" in an ascending order of section numbers.

The area setting unit 111 determines whether the cumulative number of subjects (the number of subjects cumulatively totaled) satisfies area setting conditions whenever the number of subjects for each section number is accumulated.

In description with reference to FIG. 5, an example of the area setting conditions is a condition in which the cumulative number of subjects is equal to or greater than a threshold value based on a target number of subjects. In this case, the target number of subjects may be set as the threshold value. Alternatively, when the target number of subjects is set in consideration of a predetermined margin from a minimum number of subjects required for acquiring a necessary number of responses, a numerical value obtained by subtracting a predetermined value from the target number of subjects may be set as a threshold value and the area setting conditions may be set to a condition in which the cumulative number of subjects is equal to or greater than the threshold value.

FIG. 5 illustrates an example in which the cumulative number of subjects acquired in the stage of section number "a" satisfies the area setting conditions after accumulating the number of subjects sequentially from section number "0." Therefore, the area setting unit 111 in this case sets an area based on a group of postal code sections corresponding to section numbers "0" to "a" as one evaluation target area (a first evaluation target area).

When one evaluation target area is set, the area setting unit 111 clears the cumulative number of subjects to "0," sequentially accumulates the number of subjects in an ascending order of section numbers from section number "a+1" subsequent to section number "a," and determines whether the cumulative number of subjects satisfies the area setting conditions whenever the number of subjects is accumulated.

FIG. 5 illustrates an example in which the cumulative number of subjects acquired in the stage of section number "b" satisfies the area setting conditions after accumulating the number of subjects sequentially from section number "a+1." Therefore, the area setting unit 111 in this case sets an area based on a group of postal code sections corresponding to section numbers "a+1" to "b" as a second evaluation target area (a second evaluation target area), and clears the cumulative number of subjects.

Thereafter, the area setting unit 111 sequentially sets evaluation target areas in the same order. Then, the area setting unit 111 finally accumulates the number of subjects for final section number "N."

When the cumulative number of subjects corresponding to section numbers "N-1" to "N" satisfies the area setting conditions by accumulating the number of subjects for final section number "N," the area based on the postal code section corresponding to section numbers "N-1" to "N" may be set as a final M-th evaluation target area as it is.

On the other hand, the cumulative number of subjects corresponding to section numbers "N-1" to "N," which is obtained by accumulating the number of subjects for final section number "N," may not satisfy the area setting conditions because it is much less than the target number of subjects. In this case, the area setting unit 111 may perform, for example, a process of adjusting the postal code section of section numbers "N-1" to "N" to be included in the evaluation target area currently set. In this case, it is preferable that the area setting unit 111 perform adjustment such that the postal code section of section numbers "N-1" to "N" is included in the evaluation target area including the postal code section adjacent to the postal code section of section numbers "N-1" to "N." The area setting unit 111 may perform such adjustment with reference to map information in which a postal code section is correlated with a section number on a map. The area setting unit 111 may appropriately perform adjustment such that the postal code section of section numbers "N-1" to "N," is distributed to and included in a plurality of evaluation target areas. In this case, an evaluation target area set to include the postal code section of section number "N-2" is the final M-th evaluation target area.

### [Example of process routine]

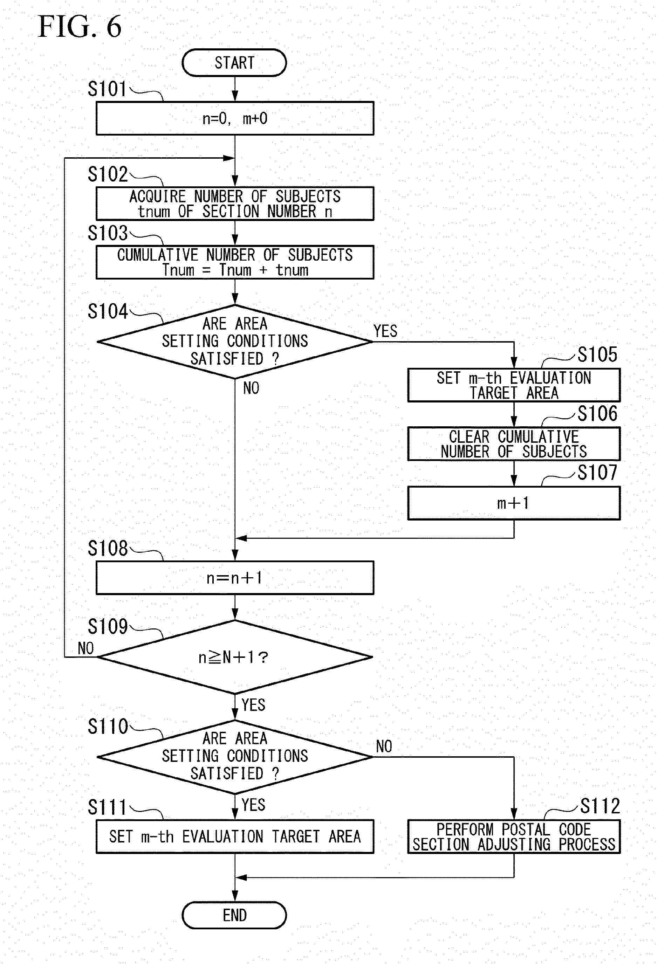

An example of a process routine which is performed in the area setting process by the publicity-associated information processing device 100 will be described below with reference to the flowchart illustrated in FIG. 6.

Step S101: When the area setting process is started, the area setting unit 111 of the publicity-associated information processing device 100 substitutes "0" as an initial value of a variable n and substitutes "1" as an initial value of a variable m. The variable n is a variable representing a section number in the section subject number information stored in the section subject number information storage unit 121. The variable m is a variable representing a number which is assigned to an evaluation target area which is set in the area setting process.

Step S102: The area setting unit 111 acquires the number of subjects Tnum correlated with section number "n" from the section subject number information.

Step S103: The area setting unit 111 updates the cumulative number of subjects Tnum by adding (accumulating) the number of subjects Tnum acquired in Step S102 to the cumulative number of subjects Tnum.

Step S104: The area setting unit 111 determines whether the cumulative number of subjects Tnum updated in Step S103 satisfies the area setting conditions.

The area setting conditions may be, for example, conditions in which the cumulative number of subjects is equal to or greater than a threshold value which is determined on the basis of the target number of subjects as described above.

When the area setting conditions are conditions in which the cumulative number of subjects is equal to or greater than a threshold value which is determined on the basis of the target number of subjects as described above, there is a likelihood that the cumulative number of subjects will be much greater than the threshold value. In this case, the number of subjects greater than necessary is included in an evaluation target area. If it is desired to avoid such a situation, the area setting conditions may include a condition that the cumulative number of subjects is within a predetermined numerical range (between a lower limit and an upper limit around a threshold value) by providing a lower limit and an upper limit around the threshold value.

Under this area setting conditions, when it is determined in Step S104 that the cumulative number of subjects is greater than the upper limit of the threshold value, for example, the area setting unit 111 divides a postal code section in which the number of subjects is finally accumulated into a first postal code section (a first divided postal code section) including the number of subjects up to the upper limit of the threshold value and a second postal code section (a second divided postal code section) including the other number of subjects which is not included in the first divided postal code section. Then, the area setting unit 111 corrects the cumulative number of subjects to a numerical value obtained by accumulating the number of subjects corresponding to the first divided postal code section. The area setting unit 111 determines that the cumulative number of subjects corrected in this way satisfies the area setting conditions in Step S104.

Step S105: When it is determined in Step S104 that the area setting conditions have been satisfied, the area setting unit 111 sets an area based on a group of postal code sections corresponding to the cumulative number of subjects which is determined in Step S104 as an M-th evaluation target area.

Step S106: The area setting unit 111 clears the cumulative number of subjects. Accordingly, subsequent accumulation of the cumulative number of subjects in Step S103 is started in a state in which the cumulative number of subjects Tnum is "0."

Step S107: The area setting unit 111 increments the variable m in response to setting of the m-th evaluation target area in Step S105.

Step S108: When it is determined in Step S104 that the area setting conditions have not been satisfied, or after the process of Step S107 has been performed, the area setting unit 111 increments the variable n.

Step S109: The area setting unit 111 determines whether the current variable n is equal to or greater than N+1 (where "N" is a maximum value of a section number).

When the variable n is less than N+1, a postal code section of which the number of subjects is not accumulated remains. Therefore, in this case, the area setting unit 111 returns the process routine to Step S102.

Step S110: On the other hand, when it is determined in Step S109 that the variable n is equal to or greater than N+1, the area setting unit 111 determines whether the current cumulative number of subjects Tnum satisfies the area setting conditions.

Step S111: When it is determined that the cumulative number of subjects Tnum satisfies the area setting conditions, the area setting unit 111 sets an area based on a group of postal code sections corresponding to the cumulative number of subjects which is used for determination of Step S110 as the M-th evaluation target area. In this way, the m-th evaluation target area which is set in Step S111 is the M-th evaluation target area which is finally set.

Step S112: On the other hand, when it is determined in Step S110 that the cumulative number of subjects Tnum does not satisfy the area setting conditions, the area setting unit 111 performs an adjustment process such that the postal code section corresponding to the cumulative number of subjects which is used for determination of Step S110 is included in the evaluation target areas which are set up to now. In this case, the M-th evaluation target area which is finally set in Step S105 is the final M-th evaluation target area.

The evaluation target areas which are set through the process routine illustrated in FIG. 6 do not reflect traffic conditions or topographic conditions in actual areas. For this reason, for example, one evaluation target area may actually be divided by a wide river, such there are restrictions on the movement of people, and due to road conditions and positional relationships with neighboring commercial facilities, multiple areas with different commercial activities may be mixed. In an evaluation target area under certain special conditions, there is a likelihood that it will be difficult to evaluate responses.

Therefore, an advertising agency CO2 may compare the evaluation target area acquired through the process routine illustrated in FIG. 6 with a map and adjust the postal code sections included in the evaluation target area such that the above-mentioned special conditions are released.

This adjustment may be performed by the publicity-associated information processing device 100, for example, by comparing the set evaluation target areas with map information correlated with the postal code sections and then determining an evaluation target area corresponding to the special conditions.

A section in this embodiment which is obtained by dividing an area according to a predetermined division rule is not limited to a postal code section which has been described above. For example, a section in this embodiment may be a section which is obtained by division based on phone numbers.

A section in this embodiment may be a section which is obtained by dividing an area in a grid form (a lattice-shaped section). Specifically, rectangular lattice-shaped sections can be formed, for example, by dividing an area using a predetermined unit distance in a north-south direction and a predetermined unit distance in an east-west direction. In this case, the unit distances in the north-south direction and the east-west direction constituting one lattice-shaped section can be set, for example, in consideration of an advertisement which is to be evaluated, the population of each area, or the like.

When the above lattice-shaped section is employed as a section in this embodiment, the postal code sections are replaced with lattice-shaped sections in the section subject number information illustrated in FIG. 3 and the number of subjects for each lattice-shaped section is stored. Such lattice-shaped sections may be independently determined in the advertisement system according to this embodiment, or standardized sections such as a standardized regional mesh may be used. Lattice-shaped sections obtained by dividing or coupling standardized lattice-shaped sections according to patterns corresponding to applications of the advertisement system according to this embodiment may be used as sections in this embodiment.

For example, an area which is larger than a postal code section can easily be set for a lattice-shaped section. Accordingly, for example, in a certain postal code section, there may be no population or there may be a very small population and thus it may be difficult to appropriately set an evaluation target area. In this case, it is possible to appropriately set an evaluation target area using a lattice-shaped section which is set to have an area larger than that of the postal code section.

### [Conclusion of embodiment]

(1) As described above, an aspect of this embodiment provides a publicity-associated information processing device (100) including an area setting unit configured to perform an area setting process of acquiring the number of subjects correlated with a section which is selected in a predetermined sequence on the basis of section subject number information correlated with the number of subjects to whom publicity is to be provided for each section (for example, each postal code section) acquired by dividing an area according to a predetermined division rule and setting an evaluation target area including the selected section in a stage in which an accumulated value of the acquired number of subjects satisfies predetermined area setting conditions.

With this configuration, it is possible to set an evaluation target area including the number of subjects with which a significant number of responses is expected on the basis of a group of postal code sections using a list in which the number of subjects is correlated with the corresponding postal code section. That is, it is possible to simply set an evaluation target area including the number of subjects corresponding to an appropriate number of responses.

The process routine in the publicity-associated information processing device 100 may be performed by recording a program for realizing the function of the publicity-associated information processing device 100 on a computer-readable recording medium and causing a computer system to read the program recorded on the recording medium and to execute the program. Here, "causing a computer system to read the program recorded on the recording medium and to execute the program" includes installing the program in the computer system. The "computer system" mentioned herein may include an operating system (OS) or hardware such as peripherals. The "computer system" may include a plurality of computer devices that are connected to each other via a network including a communication line such as the Internet, a WAN, a LAN, or a dedicated line. Examples of the "computer-readable recording medium" include a portable medium such as a flexible disk, a magneto-optical disk, a ROM, or a CD-ROM and a storage device such as a hard disk incorporated into a computer system. In this way, the recording medium storing the program may be a non-transitory recording medium such as a CD-ROM. The recording medium includes a recording medium that is accessible internally or externally from a delivery server in order to deliver the program. The code of the program stored in the recording medium of the delivery server may be different from codes of a program in a format which is executable in a terminal device. That is, the format stored in the delivery server is not limited as long as the program format is able to be downloaded from the delivery server and is executable by a terminal device. A configuration in which the program is divided into a plurality of parts and the divided program parts are downloaded at different times and then assembled in a terminal device may be employed, or the divided program parts may be delivered from different delivery servers. The "computer-readable recording medium" may include a medium that holds a program for a predetermined time, such as a volatile memory (for example, a RAM) in a computer system serving as a server or a client when the program is transmitted via a network.

The program may be designed to realize some of the above-mentioned functions. The program may be a so-called differential file (a differential program) which can realize the above-mentioned functions in combination with a program which has already been recorded in a computer system.

### [Industrial Applicability]

Some aspects of the invention can be applied to a publicity-associated information processing device and a program that can simply set evaluation target areas including a number of subjects corresponding to an appropriate number of responses.

### [Reference Signs List]

100 Publicity-associated information processing device
101 Control unit
102 Storage unit
103 Operation unit
104 Display unit
111 Area setting unit
121 Section subject number information storage unit
122 Evaluation target area setting information storage unit
300 Advertisement providing means
1221 Evaluation target area setting information

## Claims

1. A publicity-associated information processing device comprising:
an area setting unit configured to perform an area setting process of acquiring the number of subjects correlated with a section which is selected in a predetermined sequence on the basis of section subject number information correlated with the number of subjects to whom publicity is to be provided for each section acquired by dividing an area according to a predetermined division rule and setting an evaluation target area including the selected section in a stage in which an accumulated value of the acquired number of subjects satisfies predetermined area setting conditions.

2. A program causing a computer to serve as an area setting unit configured to perform an area setting process of acquiring the number of subjects correlated with a section which is selected in a predetermined sequence on the basis of section subject number information correlated with the number of subjects to whom publicity is to be provided for each section acquired by dividing an area according to a predetermined division rule and setting an evaluation target area including the selected section in a stage in which an accumulated value of the acquired number of subjects satisfies predetermined area setting conditions.
